(19) **Europäisches Patentamt / European Patent Office / Office européen des brevets**

(11) **EP 1 870 876 B1**

(12) **EUROPEAN PATENT SPECIFICATION**

(45) Date of publication and mention
of the grant of the patent:
**23.01.2013 Bulletin 2013/04**

(51) Int Cl.:
***G09G 3/36*** (2006.01)

(21) Application number: **06125134.4**

(22) Date of filing: **30.11.2006**

(54) **Apparatus and method for driving liquid crystal display device**

Vorrichtung und Verfahren zur Ansteuerung einer Flüssigkristallanzeige

Appareil et procédé de contrôle d'un dispositif d'affichage à cristaux liquides

(84) Designated Contracting States:
**DE FR GB**

(30) Priority: **23.06.2006 KR 20060056859**

(43) Date of publication of application:
**26.12.2007 Bulletin 2007/52**

(73) Proprietor: **LG Display Co., Ltd.**
**Youngdungpo-gu,**
**Seoul (KR)**

(72) Inventors:
• **Lee, Seok Woo**
 **Seoul (KR)**
• **So, Hyun Jin**
 **Seoul (KR)**

(74) Representative: **Viering, Jentschura & Partner**
**Am Brauhaus 8**
**01099 Dresden (DE)**

(56) References cited:
**EP-A- 1 669 975    JP-A- 10 082 985**
**US-A1- 2003 048 246    US-A1- 2006 017 713**

EP 1 870 876 B1

**Description**

## BACKGROUND OF THE INVENTION

### Field of the Invention

The present invention relates to a liquid crystal display (LCD) device, and more particularly, to an apparatus and method for driving an LCD device.

### Discussion of the Related Art

Liquid Crystal Display (LCD) devices have been used in many different types of electronic equipment. The LCD devices display images by adjusting the light transmittance of liquid crystal cells according to a video signal. Active matrix type LCD devices have a switching element formed for every liquid crystal cell and are well suited for displaying moving images. Thin film transistors (TFTs) are the devices primarily used as the switching element in the active matrix type LCD device.

However, LCD devices generally have a relatively slow response speed attributable to the inherent viscosity and elasticity of a liquid crystal, as can be seen from the following Equations 1 and 2:

$$\tau_r \propto \frac{\gamma d^2}{\Delta\varepsilon\left|V_a^{\,2} - V_F^{\,2}\right|} \qquad Equation\ 1$$

where $\tau_r$ is a rise time for response to a voltage is applied to the liquid crystal, Va is the applied voltage, $V_F$ is a Frederick transition voltage at which liquid crystal molecules start to be inclined, d is a liquid crystal cell gap, and y is the rotational viscosity of the liquid crystal molecules; and

$$\tau_F \propto \frac{\gamma d^2}{K} \qquad Equation\ 2$$

where $\tau_F$ is a falling time for returning the liquid crystal molecules to their original positions by an elastic restoration force after the voltage applied to the liquid crystal is turned off, and K is the inherent elastic modulus of the liquid crystal.

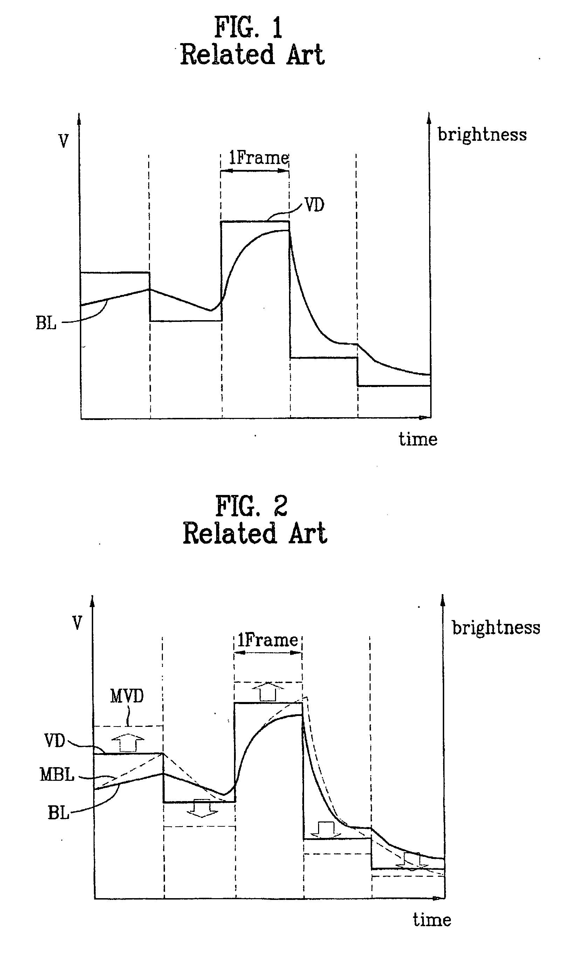

For a twisted nematic (TN) mode LCD device, although the response speed of the liquid crystal may vary with the physical properties and cell gap of the liquid crystal, rise times of 20 to 80ms and the falling times of 20 to 30ms are typical. Because these typical liquid crystal response times are longer than a moving image frame period (for example 16.67ms for moving images according to the National Television Standards Committee (NTSC) standard), the voltage charged on the liquid crystal may not reach the desired level before the next frame data is presented, as shown in FIG. 1. The slow response results in motion blurring in which an afterimage is left on the LCD display panel.

As illustrated in FIG. 1, a related art LCD device may fail to display a desired color and brightness for a moving image because, when data VD is changed from one level to another level, the corresponding display brightness level BL is unable to reach the desired value due to the slow response of the LCD device. As a result, motion blurring occurs in moving images, causing degradation in contrast ratio and display quality.

As one method for overcoming the low response speed of the LCD device, U.S. Patent No. 5,495,265 and PCT International Publication No. WO 99/09967 propose a method for modulating data using a look-up table (referred to hereinafter as an 'over-driving method'). The principle of this over-driving method of the related art is illustrated in FIG. 2.

As may be appreciated with reference to FIG. 2, the related art over-driving method includes modulating input data VD to produce modulated data MVD, and applying the modulated data to a liquid crystal cell to obtain a desired brightness level MBL. By this method, the response speed of a liquid crystal is rapidly accelerated by increasing $|V_a^2 - V_F^2|$ in the Equation 1 for a variation in the input data from that of a previous frame period in order to obtain the desired brightness level corresponding to the luminance of the input data in one frame period.

Accordingly, a related art LCD device using the over-driving method is able to compensate for a slow response of a liquid crystal by modulation of a data value to reduce or eliminate motion blurring in a moving image to display a picture having the desired color and brightness.

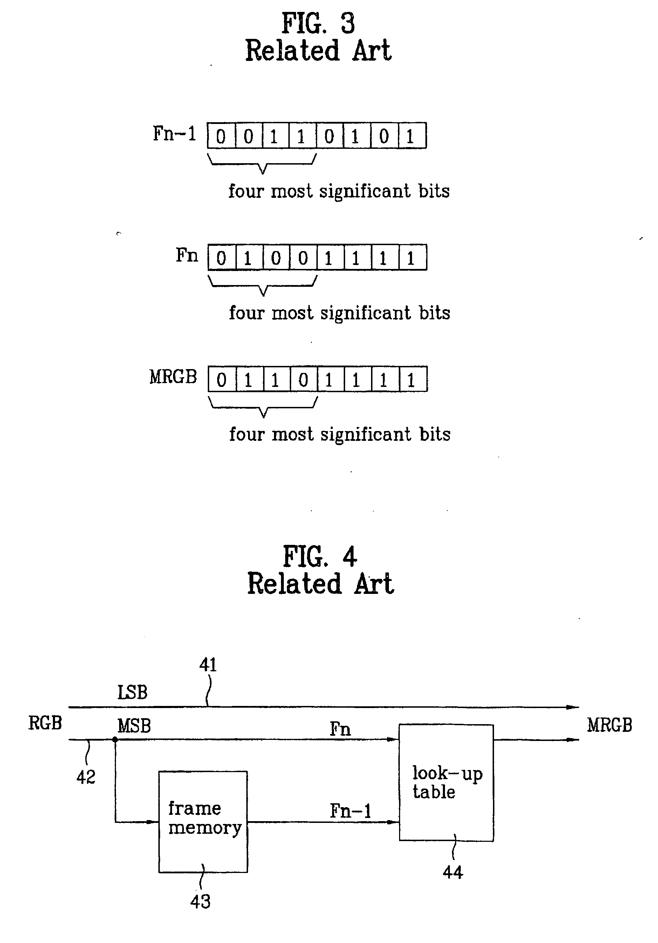

In order to reduce the memory storage used in implementing over-driving, the related art over-driving method performs modulation by comparing only respective most significant bits (MSB) of a previous frame (Fn-1) and current frame (Fn) with each other, as shown in FIG. 3. In other words, the related art over-driving method compares respective most significant bit data (MSB) of the previous frame (Fn-1) and current frame (Fn) with each other to determine whether there is a variation between the two most significant bit data (MSB). If there is a variation between the two most significant bit data (MSB), the corresponding modulated data (MRGB) is selected from a look-up table as most significant bit data (MSB) of the current frame (Fn).

FIG. 4 illustrates a related art over-driving apparatus implementing the above-described over-driving method.

As illustrated in FIG. 4, the related art over-driving apparatus comprises a frame memory 43 connected to a most significant bit bus line 42, and a look-up table 44 connected in common with the output terminals of the most significant bit bus line 42 and frame memory 43.

The frame memory 43 stores most significant bit data (MSB) for one frame period and supplies the stored data to the look-up table 44. In the related art over-driving apparatus of FIG. 4, the most significant bit data (MSB) includes the four most significant bits of 8-bit source data (RGB).

The look-up table 44 compares most significant bit data (MSB) of a current frame (Fn) supplied from the most significant bit bus line 42 with most significant bit data (MSB) of a previous frame (Fn-1) inputted from the frame memory 43, as in Table 1 below, and selects modulated data (MRGB) corresponding to the comparison result. The modulated data (MRGB) is combined with least significant bit data (LSB) from a least significant bit bus line 41 and then supplied to an LCD device.

Where the most significant bit data (MSB) is limited to four bits, the modulated data (MRGB) registered in the look-up table 44 of the over-driving apparatus and method is as follows:

**TABLE 1**

| | | Current Frame | | | | | | | | | | | | | | | |
|---|---|---|---|---|---|---|---|---|---|---|---|---|---|---|---|---|---|
| | | 0 | 1 | 2 | 3 | 4 | 5 | 6 | 7 | 8 | 9 | 10 | 11 | 12 | 13 | 14 | 15 |
| | 0 | 0 | 1 | 3 | 4 | 6 | 7 | 9 | 10 | 11 | 12 | 14 | 15 | 15 | 15 | 15 | 15 |
| | 1 | 0 | 1 | 2 | 4 | 5 | 7 | 9 | 10 | 11 | 12 | 13 | 14 | 15 | 15 | 15 | 15 |
| | 2 | 0 | 1 | 2 | 3 | 5 | 7 | 8 | 9 | 10 | 12 | 13 | 14 | 15 | 15 | 15 | 15 |
| | 3 | 0 | 1 | 2 | 3 | 5 | 6 | 8 | 9 | 10 | 11 | 12 | 14 | 14 | 15 | 15 | 15 |
| | 4 | 0 | 0 | 1 | 2 | 4 | 6 | 7 | 9 | 10 | 11 | 12 | 13 | 14 | 15 | 15 | 15 |
| | 5 | 0 | 0 | 0 | 2 | 3 | 5 | 7 | 8 | 9 | 11 | 12 | 13 | 14 | 15 | 15 | 15 |
| Previous | 6 | 0 | 0 | 0 | 1 | 3 | 4 | 6 | 8 | 9 | 10 | 11 | 13 | 14 | 15 | 15 | 15 |
| Frame | 7 | 0 | 0 | 0 | 1 | 2 | 4 | 5 | 7 | 8 | 10 | 11 | 12 | 14 | 14 | 15 | 15 |
| | 8 | 0 | 0 | 0 | 1 | 2 | 3 | 5 | 6 | 8 | 9 | 11 | 12 | 13 | 14 | 15 | 15 |
| | 9 | 0 | 0 | 0 | 1 | 2 | 3 | 4 | 6 | 7 | 9 | 10 | 12 | 13 | 14 | 15 | 15 |
| | 10 | 0 | 0 | 0 | 0 | 1 | 2 | 4 | 5 | 7 | 8 | 10 | 11 | 13 | 14 | 15 | 15 |
| | 11 | 0 | 0 | 0 | 0 | 0 | 2 | 3 | 5 | 6 | 7 | 9 | 11 | 12 | 14 | 15 | 15 |
| | 12 | 0 | 0 | 0 | 0 | 0 | 1 | 3 | 4 | 5 | 7 | 8 | 10 | 12 | 13 | 15 | 15 |
| | 13 | 0 | 0 | 0 | 0 | 0 | 1 | 2 | 3 | 4 | 6 | 8 | 10 | 11 | 13 | 14 | 15 |
| | 14 | 0 | 0 | 0 | 0 | 0 | 0 | 1 | 2 | 3 | 5 | 7 | 9 | 11 | 13 | 14 | 15 |
| | 15 | 0 | 0 | 0 | 0 | 0 | 0 | 0 | 1 | 2 | 4 | 6 | 9 | 11 | 13 | 14 | 15 |

In the above Table 1, the leftmost column represents the data voltage (VDn-1) of the previous frame (Fn-1) and the uppermost row represents the data voltage (VDn) of the current frame (Fn). The contents of Table 1 are look-up table information obtained by expressing four most significant bits in decimal form.

The related art apparatus and method for driving the LCD device is used to provide a high response speed of liquid crystal during a gray-to-gray change between previous frame and current frames. In comparison to the variation associated with a black-to-white change, the gray-to-gray change involves a relatively small voltage difference between frames, so that the liquid crystal response for each gray-to-gray change without overdriving would be slow or non-linear, resulting in poor color change in a moving image or degradation in picture quality.

In the above-described over-driving apparatus a digital memory, such as the look-up table 44, is used in the generation of modulated data (MRGB) in the comparison of the data of the previous frame (Fn-1) with that of the current frame (Fn). The use of the digital memory increases chip size as well as manufacturing costs for the LCD device.
US 2006/017713 A1 describes an LCD driving circuit including a signal source, a modulator, and a combiner. The signal source outputs a first data signal. The modulator modulates an amplitude and pulse width of the first data signal to produce a second data signal. The combiner combines the first data signal with the second data signal. An analogue data signal based on the combined data signal is provided to a data line of a display panel of the display device.
US 2003/048246 A1 describes an apparatus and a method for driving a liquid crystal display, that include modulating source data based on registered data previously provided and supplying the modulated source data to a display panel at an initial period of one frame interval, and applying a black voltage as black data to the display panel for at least a portion of the rest period of the frame, the black voltage allowing a black picture to be displayed on the display panel.

## SUMMARY OF THE INVENTION

Accordingly, the present invention is directed to an apparatus and method for driving an LCD device, which substantially obviates one or more problems due to limitations and disadvantages of the related art.
An advantage of the present invention is to provide an apparatus and method for driving an LCD device wherein a response speed of liquid crystal can be increased even without using a memory, thereby preventing degradation in picture quality.
Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.
To achieve these objects and other advantages and in accordance with the purpose of the invention, as embodied and broadly described herein, an apparatus for driving an LCD device includes an image display unit including a plurality of liquid crystal cells formed in areas defined by a plurality of gate and data lines; a gate driver to sequentially supply a scan pulse to the gate lines; a data driver to modulate input data in accordance with the input data, to selectively convert the input data and the modulated input data into an analog video signal, and to supply the analog video signal to the data line; and a timing controller to arrange externally supplied source data, to supply the arranged source data to the data driver, and to control the data driver and the gate driver.
In another aspect of the present invention, a method for driving an LCD device having an image display unit including a plurality of liquid crystal cells formed in areas defined by a plurality of gate and data lines includes a first step for sequentially supplying a scan pulse to the gate lines; and a second step for generating modulated input data from input data in accordance with the input data, selectively converting the input data and modulated input data into an analog video signal, and supplying the selected converted analog video signal to the data line.
It is to be understood that both the foregoing general description and the following detailed description are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
In the drawings:
FIG. 1 is a waveform diagram illustrating a data-dependent brightness variation in a related art LCD device;
FIG. 2 is a waveform diagram illustrating a data modulation-dependent brightness variation in a related art over-driving method of an LCD device;
FIG. 3 is a view illustrating most significant bit data modulation in a related art over-driving apparatus of an LCD device;
FIG. 4 is a block diagram of the related art over-driving apparatus of an LCD device;
FIG. 5 is a schematic view illustrating a driving apparatus of an LCD device according to an embodiment of the present invention;
FIG. 6 is a block diagram schematically illustrating a data driver according to an embodiment of the present invention;
FIG. 7 is a block diagram schematically illustrating a data output signal generator according to an embodiment of the present invention;
FIG. 8 is a driving timing view of a data output signal generator shown in FIG. 7;
FIG. 9 is a block diagram schematically illustrating a modulator according to an embodiment of the present invention; and

FIG. 10 is a waveform diagram illustrating an analog video signal according to an embodiment of the present invention.

## DETAILED DESCRIPTION OF THE ILLUSTRATED EMBODIMENTS

Reference will now be made in detail to embodiments of the present invention, examples of which are illustrated in the accompanying drawings. Wherever possible, the same reference numbers will be used throughout the drawings to refer to the same or like parts.

Hereinafter, an apparatus and method for driving an LCD device according to the present invention will be explained with reference to the accompanying drawings.

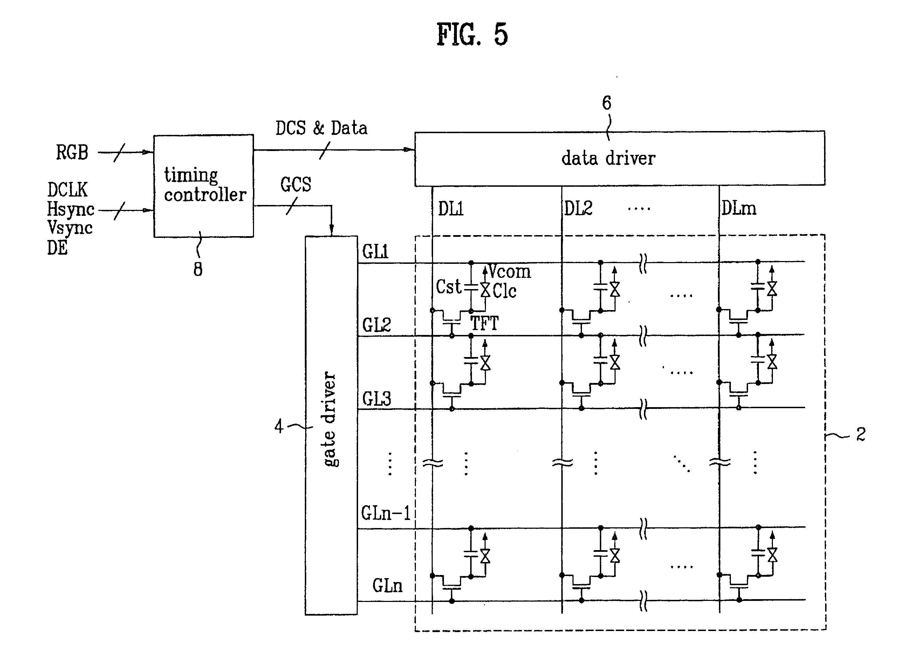

FIG. 5 is a schematic view illustrating a driving apparatus of an LCD device according to an embodiment of the present invention.

As shown in FIG. 5, the driving apparatus is provided with an image display unit 2 that includes a plurality of liquid crystal cells respectively formed in areas defined by n gate lines (GL1 to GLn) and m data lines (DL1 to DLm); a gate driver 4 that sequentially supplies a scan pulse to the gate lines (GL1 to GLn); a data driver 6 that converts i-bit input data (Data) to i-bit modulated data to enable rapid response speed of liquid crystal based on at least two most significant bit data of i-bit input data, converts the i-bit modulated data or i-bit input data to an analog video signal, and supplies the analog video signal to the data lines (DL 1 to DLm) in synchronization with the scan pulse; and a timing controller 8 that arranges source data (IZGB) supplied from the external, supplies the arranged source data (RGB) to the data driver 6, and controls the gate driver 4 and the data driver 6.

The image display unit 2 includes a transistor array substrate and a color filter array substrate that are bonded together; spacers to maintain a uniform cell gap between the bonded substrates; and a liquid crystal layer formed in the gap provided between the two bonded substrates and maintained by the spacers.

The image display unit 2 further includes a plurality of thin film transistors (TFT) formed at the liquid cells defined by n gate lines (GL1 to GLn) and m data lines (DL1 to DLm). The liquid crystal cells are each connected to a respective TFT. The TFTs supply the analog video signals provided from the data lines (DL1 to DLm) to the liquid crystal cells in response to the scan pulse provided from the gate lines (GL 1 to GL,n).

Each liquid crystal cell can be equivalently represented as a liquid crystal capacitor Clc because each liquid crystal cell is provided with a common electrode facing a pixel electrode connected to the TFT with liquid crystal between the common electrode and the pixel electrode. Each liquid crystal cell includes a storage capacitor Cst for maintaining the analog video signal charged on the liquid crystal capacitor Clc until the next analog video signal is charged thereon.

The timing controller 8 arranges source data (RGB) supplied from a source external to the LCD device to a form appropriate for driving the image display unit 2, and supplies the arranged source data (RGB) to the data driver 6. The timing controller 8 generates a data control signal (DCS) and a gate control signal (GCS) using a dot clock signal (DCLK), a data enable signal (DE), and horizontal and vertical synchronous signals (Hsync and Vsync) supplied from an external source, and applies the generated data control signal (DCS) and gate control signal (GCS) respectively to the data and gate drivers 6 and 4, to thereby control the driving timing thereof.

The gate driver 4 includes a shift register that generates a scan pulse (gate high signal) in response to the gate control signal (GCS) of the timing controller 8. The gate driver 4 sequentially supplies the gate high signal to the gate lines (GL) of the image display unit 2, to thereby turn on the TFTs connected with each gate line (GL).

The data driver 6 converts i-bit input data (Data) to i-bit modulated data to provide a rapid response speed of liquid crystal based on at least two most significant bits of i-bit input data supplied from the timing controller 8 in response to the data control signal (DCS) supplied from the timing controller 8, converts the i-bit modulated data or i-bit input data to the analog video signal, and supplies the analog video signal for one horizontal line to the data lines (DL1 to DLm) by one horizontal period supplied with the scan pulse. The data driver 6 inverts the polarity of the analog video signal supplied to the data lines (DL) in response to a polarity control signal (POL).

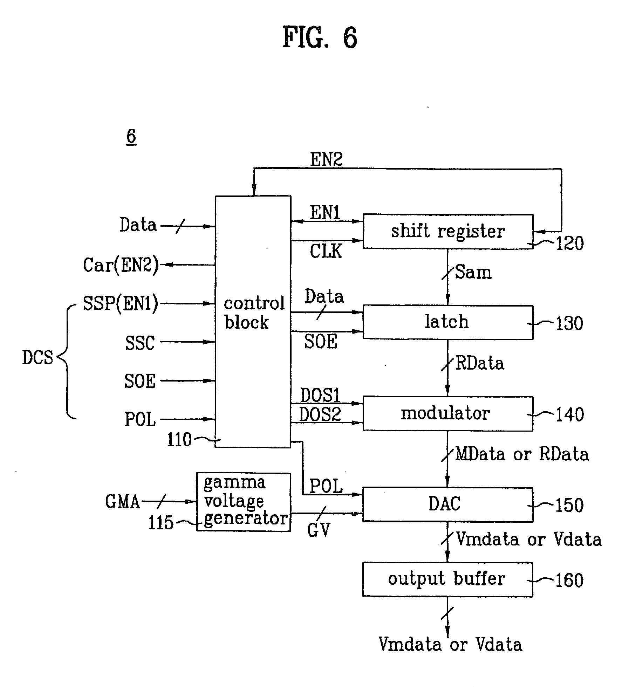

As shown in FIG. 6, for the purpose of supplying the analog video signal, the data driver 6 includes a control block 110, a gamma voltage generator 115, a shift register 120, a latch 130, a modulator 140, a digital-analog converter (DAC) 150, and an output buffer 160.

The control block 110 supplies the i-bit input data (Data) provided from the timing controller 8 to the latch 130, and supplies the data control signal (DCS) provided from the timing controller 8 to the shift register 120, the latch 130, and the DAC 150. The control block 110 supplies a first enable signal (EN1) corresponding to a source start pulse (SSP) and a clock signal (CLK) corresponding to a source shift clock (SSC) to the shift register 120, and outputs a second enable signal (EN2) corresponding to a carry signal (Car) outputted from the shift register 120. The control block 110 supplies a source output enable (SOE) to the latch 130, and supplies the polarity control signal (POL) to the DAC 150.

The control block 110 includes a data output signal generator that generates first and second data output signals (DOS1 and DOS2) to selectively convert the i-bit modulated data or the i-bit input data to an analog video signal by using the source output enable (SOE) provided from the timing controller 8, and supplies the generated first and second data output signals (DOS1 and DOS2) to the modulator 140.

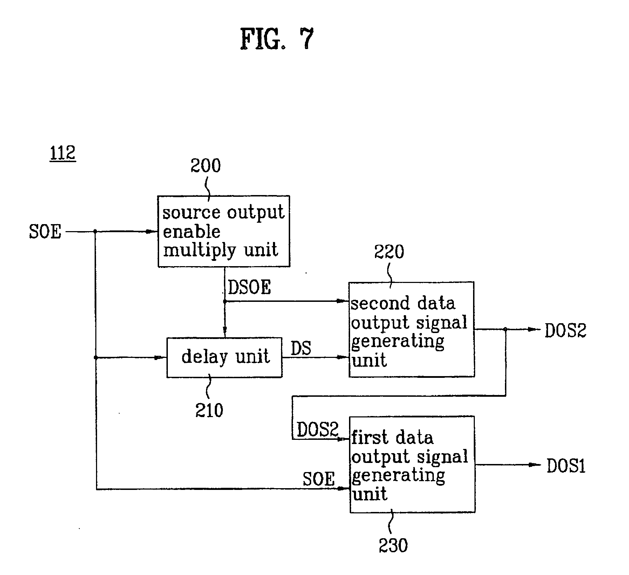

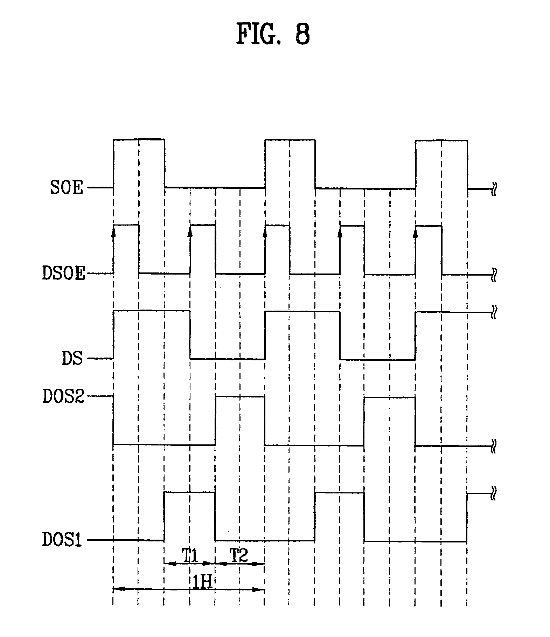

FIG. 7 is a block diagram schematically illustrating a data output signal generator according to an embodiment of the present invention, and FIG. 8 is a driving timing view of a data output signal generator shown in FIG. 7. Referring to FIG. 7 in association with FIG. 8, the data output signal generator 112 includes a source output enable multiply unit 200, a delay unit 210, and first and second data output signal generating units 220 and 230.

The source output enable multiply unit 200 multiplies the source output enable (SOE) by two, providing two DSOE signals for every single SOE signal, and supplies the multiplied source output enable (DSOE) to the delay unit 210 and the second data output signal generating unit 220, respectively.

The delay unit 210 delays the source output enable (SOE) according to an output signal (DSOE) from the source output enable multiply unit 200, and supplies the delayed signal to the second data output signal generating unit 220. That is, the delay unit 210 delays the source output enable (SOE) according to a rising edge of the multiplied source output enable (DSOE).

The second data output signal generating unit 220 logically operates on the output signal (DSOE) of the source output enable multiply unit 200, and the output signal (DS) of the delay unit 210 to thereby generate the second data output signal (DOS2). For example, the second data output signal generating unit 220 may include a NOR-operation gate that generates the second data output signal (DOS2) with a high state only when both of the input signals (DSOE and DS) to the NOR-operation gate are in the low state.

The first data output signal generating unit 230 logically operates on the source output enable (SOE) and the second data output signal (DOS2) to thereby generate the first data output signal (DOS1). For example, the first data output signal generating unit 230 may include a second NOR-operation gate that generates the first data output signal (DOS1) having the high state only when both of the input signals (SOE and DOS2) to the second NOR-operation gate are in the low state.

The data output signal generator 112 supplies the first data output signal (DOS1) having the high state to the modulator 140 during an initial time period (T1) of the data output of source output enable (SOE) supplied by one horizontal period (1H), and supplies the second data output signal (DOS2) of the high state to the modulator 140 during the remaining time period (T2) excluding the initial time period (T1) on the data output of source output enable (SOE). In the illustrated embodiment, the initial time period (T1) is substantially equal in duration to the remaining time period (T2).

In FIG. 6, the gamma voltage generator 115 generates $2^i$ gamma voltages (GV), each gamma voltage distinct from one another and then supplies the generated $2^i$ gamma voltages to the DAC 150. For example, the distinct gamma voltages may be generated by dividing a gamma reference voltage (GMA) supplied from a gamma reference voltage generator by each of the i-bit gray scale numbers.

The shift register 120 generates a sampling signal (Sam) by sequentially shifting the first enable signal (EN1) supplied from the control block 110 in accordance with the clock signal (CLK) of the control block 110, and supplies the sampling signal (Sam) to the latch 130.

The latch 130 latches i-bit input data (Data), provided from the control block 110, for one horizontal line based on the sampling signal provided from the shift register 120. The latch 130 supplies i-bit data (RData) latched for one horizontal line in accordance with the source output enable (SOE) to the modulator 140.

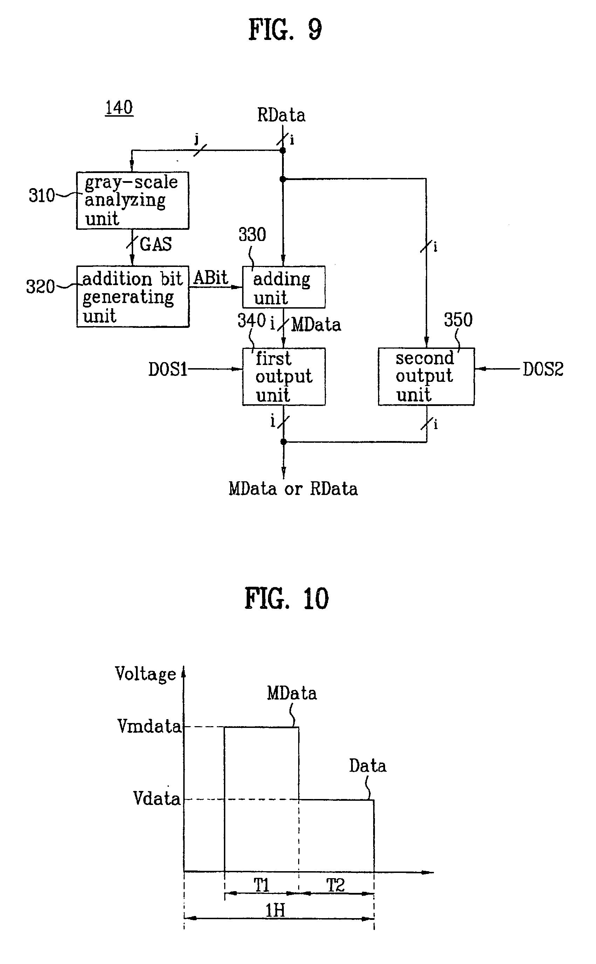

As shown in FIG. 9, the modulator 140 includes a gray-scale analyzing unit 310, an addition bit generating unit 320, adding unit 330, and first and second output units 340 and 350.

The gray-scale analyzing unit 310 analyzes at least two most significant bit data (j) of i-bit latch data (RData) supplied from the latch 130, and supplies a gray-scale analyzing signal (GAS) to the addition bit generating unit 330. For example, the gray-scale analyzing unit 310 may generate the gray-scale analyzing signal (GAS) as shown in the following table 2, according to the two most significant bit data of i-bit latch data (RData) supplied from the latch 130.

**TABLE 2**

| Two most significant bits | Gray-scale analyzing signal (GAS) |
| --- | --- |
| 00 | 0 |
| 01 | 1 |
| 10 | 2 |
| 11 | 3 |

The addition bit generating unit 320 generates addition bit (ABit) of at least two bits in accordance with the gray-scale analyzing signal (GAS) supplied from the gray-scale analyzing unit 310. For example, as shown in the following table 3, if the gray-scale analyzing signal (GAS) corresponds to '0' or '3', the addition bit generating unit 320 generates the addition bit (ABit) of '001'. If the gray-scale analyzing signal (GAS) corresponds to '1' or '2', the addition bit generating unit 320 generates the addition bit (ABit) of '010'. The following table 3 shows one example of a correspondence between analyzing signal and the generated addition bit (ABit), but the invention may be practicing using correspondences other than that illustrated in table 3. For example, the generation of the addition bit (ABit) may be varied to accommodate different resolutions and liquid crystal operating modes of the LCD panel.

**TABLE 3**

| Gray-scale analyzing signal (GAS) | Addition bit (ABit) |
|---|---|
| 0 | 001 |
| 1 | 010 |
| 2 | 010 |
| 3 | 001 |

The adding unit 330 adds the addition bit (ABit) of at least two bits provided from the addition bit generating unit 320 to the most significant data of i-bit latch data (RData) provided from the latch 130 to thereby generate i-bit modulated data (MData). The adding unit 330 supplies i-bit modulated data (MData) to the first output unit 340. Accordingly, the gray scale of i-bit modulated data (MData) is larger than the gray scale of i-bit latch data (RData).

In accordance with the first data output signal (DOS1) of the high state, the first output unit 340 supplies the i-bit modulated data (MData) provided from the adding unit 330 to the DAC 150. In accordance with the second data output signal (DOS2) of the high state, the second output unit 350 supplies the i-bit latch data (RData) provided from the latch 130 to the DAC 150.

The modulator 140 converts the i-bit latch data (RData) into the i-bit modulated data (MData) for the rapid response speed of liquid crystal in accordance with at least two most significant bit data of the i-bit latch data (RData) supplied from the latch 130. After supplying the i-bit modulated data (MData) to the DAC 150 in accordance with the first data output signal (DOS1) of the high state, the modulator 140 supplies the i-bit latch data (RData) to the DAC 150 in accordance with the second data output signal (DOS2) of the high state.

For example, if the latch 130 supplies the latch data (RData) of '011000' to the modulator 140, the modulator 140 generates the addition bit (ABit) of '010' according to the gray-scale analyzing signal (GAS) of '1' corresponding to the two most significant bits of '01' in the latch data (RData) of '011000', and adds the addition data (ABit) of '010' to the three most significant bits of the latch data (RData) of '011000', thereby generating modulated data (MData) of '101000'.

The modulator 140 supplies the modulated data (MData) of '101000' to the DAC 150 while the first data output signal (DOS1) has a the high state during the initial time period (T1) in the data output period of the source output enable (SOE). The modulator 140 supplies the latch data (RData) of '011000' to the DAC 150 while the second data output signal (DOS2) has a the high state during the remaining time period (T2) of the data output period that excludes the initial time period (T1) in the data output period of the source output enable (SOE).

Referring again to FIG. 6, the DAC 150 selects positive and negative polarity gamma voltages (GV) corresponding to the i-bit modulated data (MData) supplied from the modulator 140 among the $2^i$ gamma voltages (GV) having the different values supplied from the gamma voltage generator 115, selects one of the positive and negative polarity gamma voltages (GV) based on the polarity control signal (POL) as the analog video signal (Vmdata), and supplies the analog video signal to the output buffer 160.

The DAC 150 selects positive and negative polarity gamma voltages (GV) corresponding to the i-bit latch data (RData) supplied from the modulator 140 from the 2' gamma voltages (GV) having the different values supplied from the gamma voltage generator 115, selects one of the positive and negative polarity gamma voltages (GV) based on the polarity control signal (POL) as the analog video signal (Vdata), and supplies the selected voltage to the output buffer 160.

The output buffer 160 buffers the analog video signal (Vmdata) corresponding to the i-bit modulated data (MData) supplied from the DAC 150, and supplies the buffered signal to the data lines (DL) during the initial time period (T1) in the data output period of the source output enable (SOE). The output buffer 160 buffers the analog video data (Vdata) corresponding to the i-bit latch data (RData) supplied from the DAC 150, and supplies the buffered signal to the data lines (DL) during the remaining time period (T2) that excludes the initial time period (T1) in the data output period of the source output enable (SOE). The output buffer 160 amplifies and outputs the analog video signal (Vmdata or Vdata) at a suitable level in consideration of the loading on the data lines (DL).

As shown in FIG. 10, after the data driver 6 previously drives the liquid crystal cell with the analog video signal (Vmdata) corresponding to the i-bit modulated data (MData) during the initial time period (T1) in the data output of the source output enable (SOE), the data driver 6 drives the liquid crystal cell with the analog video signal (Vdata) corresponding to the original i-bit input data (Data) during the remaining time period (T2) that excludes the initial time period (T1) in the data output of the source output enable (SOE).

As described above, the apparatus and method for driving the LCD device according to the present invention may provide the following advantages.

In the apparatus and method for driving the LCD device according to the present invention, the liquid crystal cell is previously driven by modulating the input data in accordance with at least two bits of the input data, and then the liquid crystal cell is driven to the desired state in accordance with the original input data.

Accordingly, the response speed of liquid crystal for the intermediate gray scale may be increased without using the additional memory to prevent the color change or degradation in picture quality. Further, by allowing the omission of additional memory in an apparatus and method for driving the LCD device according to the present invention the fabrication cost of the LCD device can be decreased.

It will be apparent to those skilled in the art that various modifications and variation can be made in the present invention without departing from the scope of the appended claims.

**Claims**

1.   An apparatus for driving an LCD device comprising:

an image display unit (2) including a plurality of liquid crystal cells formed in areas defined by a plurality of gate and data lines (GL1-GLn, DL1-DLm);
a gate driver (4) to supply a scan pulse to each of the gate lines (GL1-GLn);
a data driver (6) to generate a modulated data in accordance with the input data, to selectively convert the input data and the modulated data into an analog video signal, and to supply the analog video signal to each of the data lines (DL1-DLm); and
a timing controller (8) to arrange externally supplied source data, to supply the arranged source data to the data driver (6), and to control the data driver (6) and the gate driver (4),
wherein the data driver (4) comprises:

a latch (130) to latch the input data (Data);
a modulator (140) to generate the modulated data (MData) in accordance with the latched data (RData) supplied from the latch (130), the modulator (130) comprising a gray-scale analyzing unit (310) to generate a gray-scale analyzing signal (GAS) by analyzing at least two most significant bit data (j) of the latched data (RData), an addition bit generating unit (320) to generate an addition bit (ABit) of at least two bits in accordance with the gray-scale analyzing signal (GAS), and an adding unit (330) to generate the modulated data (MData) by adding the addition bit (ABit) to the at least two most significant bits of the latched data (RData); and
a digital-analog converter to convert the modulated data (MData) into a first analog video signal (Vmdata) and to supply the first analog video signal (Vmdata) to the data line during an initial time period (T1) of data output period of a source output enable (SOE), and to convert the latched data (RData) into a second analog video signal (Vdata) and to supply the second analog video signal (Vdata) to the data line during a remaining time period (T2) exclusive of the initial time period (T1) of the data output period of a source output enable (SOE).

2.   The apparatus of claim 1, wherein the data driver (6) further comprises:

a data output signal generator (112) to generate first and second data output signals (DOS I, DOS2) having the different values by using a source output enable (SOE) supplied from the timing controller (8);
a shift register (120) to generate a sampling signal (Sam) and to supply the sampling signal to the latch (130).

3.   The apparatus of claim 2, wherein the data output signal generator (112) comprises:

a multiply unit (200) to multiply the frequency of the source output enable (SOE) by two so as to generate a multiplied source output enable (DSOE);
a delay unit (210) to delay the source output enable (SOE) in accordance with the multiplied source output enable (DSOE) to generate a delayed source output enable (DS);
a second data output signal generating unit (220) to generate the second data output signal (DOS2) by logically operating on the multiplied source output enable (DSOE) and the delayed source output enable (DS) ; and
a first data output signal generating unit (230) to generate the first data output signal (DOS1) by logically operating on the second data output signal (DOS2) and the source output enable (SOE).

4. The apparatus of claim 3, wherein the first and second data output signal generating units (230, 220) are formed of NOR-operation gates.

5. The apparatus of claim 2, wherein the modulator (140) further comprises:

a first output unit (340) to output the modulated data (MData) to the digital-analog converter (150) in accordance with the first data output signal (DOS1); and
a second output unit (350) to output the latched data (RData) to the digital-analog converter (150) in accordance with the second data output signal (DOS2).

6. The apparatus of claim 1, wherein the latched data is identical in number of bits to the modulated data.

7. The apparatus of claim 1, wherein the gray scale of the modulated data is larger than the gray scale of the latched data.

8. A method for driving an LCD device having an image display unit (2) including a plurality of liquid crystal cells formed in areas defined by a plurality of gate and data lines (GL1-GLn, DL1-DLm) comprising:

a first step for supplying a scan pulse to each of the gate lines (GL1-GLn); and
a second step for generating modulated data from input data in accordance with the input data, selectively converting the input data and modulated data into an analog video signal, and supplying the selected converted analog video signal to the data line,
wherein the second steps includes;

latching the input data (Data) to form latched data (RData);
generating the modulated data (MData) in accordance with the latched data (RData), wherein generating the modulated data (MData) comprises: generating a gray-scale analyzing signal (GAS) by analyzing at least two most significant bit data (j) of the latched data (RData); generating an addition bit (ABit) of at least two bits in accordance with the gray-scale analyzing signal (GAS); and generating the modulated data (MData) by adding the addition bit (ABit) to the at least two most significant bits of the latched data (RData); and
converting the modulated data (MData) into a first analog video signal (Vmdata) and to supply the first analog video signal (Vmdata) to the data line during an initial time period (T1) of data output period of a source output enable (SOE), and converting the latched data (RData) into a second analog video signal (Vdata) and to supply the second analog video signal (Vdata) to the data line during a remaining time period (T2) exclusive of the initial time period (T1) of the data output period of a source output enable (SOE).

9. The method of claim 8, wherein the second step further comprises:

generating first and second data output signals (DOS I, DOS2) having differing logic states using a source output enable (SOE).

10. The method of claim 9, wherein generating the first and second data output signals (DOS1, DOS2) comprises:

multiplying the frequency of the source output enable (SOE) by two so as to generate a multiplied source output enable (DSOE);
delaying the source output enable (SOE) in accordance with the multiplied source output enable (DSOE) to generate a delayed source output enable (DS);
generating the second data output signal (DOS2) by logically operating on the multiplied source output enable (DSOE) and the delayed source output enable (DS); and
generating the first data output signal (DOS1) by logically operating on the second data output signal (DOS2) and the source output enable (SOE).

11. The method of claim 8, wherein the latched input data (RData) is identical in number of bits to the modulated data (MData).

12. The method of claim 8, wherein the gray scale of the modulated data (MData) is larger than the gray scale of the latched input data (RData).

**Patentansprüche**

1. Vorrichtung zum Ansteuern einer LCD-Einrichtung, aufweisend:

eine Bildanzeigeeinheit (2), die eine Vielzahl von Flüssigkristallzellen aufweist, die in Bereichen gebildet sind, die mittels einer Mehrzahl von Gate- und Datenleitungen (GL1-GLn, DL1-DLm) definiert sind;
eine Gate-Ansteuereinrichtung (4) zum Zuführen eines Abtastpulses zu jeder der Gate-Leitungen (GL1-GLn);
eine Daten-Ansteuereinrichtung(6) zum Erzeugen von modulierten Daten entsprechend den Eingabedaten, zum selektiven Umwandeln der Eingabedaten und der modulierten Daten in ein analoges Videosignal und zum Zuführen des analogen Videosignals zu jeder der Datenleitungen (DL1-DLm); und
eine Zeitablaufsteuerung (8) zum Anordnen von extern zugeführten Quelldaten, zum Zuführen der angeordneten Quelldaten zu der Daten-Ansteuereinrichtung (6) und zum Kontrollieren der Daten-Ansteuereinrichtung (6) und der Gate-Ansteuereinrichtung (4),
wobei die Daten-Ansteuereinrichtung (4) aufweist:

ein Auffangregister (130) zum Zwischenspeichern der Eingabedaten (Data);
einen Modulator (140) zum Erzeugen der modulierten Daten (MData) entsprechend den von dem Auffangregister (130) zugeführten zwischengespeicherten Daten (RData), wobei der Modulator (130) eine Grauskala-Analyseeinheit (310) zum Erzeugen eines Grauskala-Analysesignals (GAS) mittels Analysierens von mindestens zwei höchstwertigen Bitdaten (j) der zwischengespeicherten Daten (RData), eine Addier-Bit-Erzeugungseinheit (320) zum Erzeugen eines Addier-Bits (ABit) von mindestens zwei Bits entsprechend dem Grauskala-Analysesignal (GAS) und eine Addier-Einheit (330) zum Erzeugen der modulierten Daten (MData) mittels Addierens des Anhang-Bits (ABit) zu den mindestens zwei höchstwertigen Bits der zwischengespeicherten Daten (RData); und
einen Digital-Analog-Wandler zum Umwandeln der modulierten Daten (MData) in ein erstes analoges Videosignal (Vmdata) und Zuführen des ersten analogen Videosignals (Vmdata) zu der Datenleitung während eines Anfangszeitabschnitts (T1) einer Daten-Ausgabeperiode eines Quellausgabe-Freigabesignals (SOE) und zum Umwandeln der zwischengespeicherten Daten (RData) in ein zweites analoges Videosignal (Vdata) und Zuführen des zweiten analogen Videosignals (Vdata) zu der Datenleitung während eines restlichen Zeitabschnitts (T2) ausschließlich des Anfangszeitabschnitts (T1) der Daten-Ausgabeperiode eines Quellausgabe-Freigabesignals (SOE).

2. Vorrichtung gemäß Anspruch 1, wobei die Daten-Ansteuereinrichtung (6) ferner aufweist:

einen Daten-Ausgabesignal-Erzeuger (112) zum Erzeugen eines ersten und zweiten Daten-Ausgabesignals (DOS1, DOS2), die unterschiedliche Werte aufweisen, unter Verwendung eines von der Zeitablaufsteuerung (8) zugeführten Quellausgabe-Freigabesignals (SOE);
ein Schieberegister (120) zum Erzeugen eines Abtastsignals (Sam) und zum Zuführen des Abtastsignals zu dem Auffangregister (130).

3. Vorrichtung gemäß Anspruch 2, wobei der Daten-Ausgabesignal-Erzeuger (112) aufweist:

eine Multiplizier-Einheit (200) zum Multiplizieren der Frequenz des Quellausgabe-Freigabesignals (SOE) mit Zwei zum Erzeugen eines multiplizierten Quellausgabe-Freigabesignals (DSOE) ;
eine Verzögerungs-Einheit (210) zum Verzögern des Quellausgabe-Freigabesignals (SOE) entsprechend dem multiplizierten Quellausgabe-Freigabesignal (DSOE) zum Erzeugen eines verzögerten Quellausgabe-Freigabesignals (DS);
eine Zweites-Daten-Ausgabesignal-Erzeugungseinheit (220) zum Erzeugen des zweiten Daten-Ausgabesignals (DOS2) mittels Anwendens einer logischen Operation auf das multiplizierte Quellausgabe-Freigabesignal (DSOE) und das verzögerte Quellausgabe-Freigabesignal (DS); und
eine Erstes-Daten-Ausgabesignal-Erzeugungseinheit (230) zum Erzeugen des ersten Daten-Ausgabesignals (DOS1) mittels Anwendens einer logischen Operation auf das zweite Daten-Ausgabesignal (DOS2) und das Quellausgabe-Freigabesignal (SOE) .

4. Vorrichtung gemäß Anspruch 3, wobei die Erstes-und Zweites-Daten-Ausgabesignal-Erzeugungseinheiten (230, 220) aus NOR-Operation-Gattern gebildet sind.

5. Vorrichtung gemäß Anspruch 2, wobei der Modulator (140) ferner aufweist:

eine erste Ausgabeeinheit (340) zum Ausgeben der modulierten Daten (MData) an den Digital-Analog-Wandler (150) entsprechend dem ersten Daten-Ausgabesignal (DOS1); und
eine zweite Ausgabeeinheit (350) zum Ausgeben der zwischengespeicherten Daten (RData) an den Digital-Analog-Wandler (150) entsprechend dem zweiten Daten-Ausgabesignal (DOS2) .

6. Vorrichtung gemäß Anspruch 1, wobei die zwischengespeicherten Daten die gleiche Anzahl an Bits aufweisen wie die modulierten Daten.

7. Vorrichtung gemäß Anspruch 1, wobei die Grauskala der modulierten Daten größer ist als die Grauskala der zwischengespeicherten Daten.

8. Verfahren zum Ansteuern einer LCD-Einrichtung mit einer Bildanzeigeeinheit (2), die eine Vielzahl von Flüssigkristallzellen aufweist, die in Bereichen gebildet sind, die mittels einer Mehrzahl von Gate- und Datenleitungen (GL1-GLn, DL1-DLm) definiert sind, aufweisend:

einen ersten Schritt zum Zuführen eines Abtastpulses zu jeder der Gate-Leitungen (GL1-GLn); und
einen zweiten Schritt zum Erzeugen modulierter Daten aus Eingabedaten entsprechend den Eingabedaten, selektiv Umwandeln der Eingabedaten und der modulierten Daten in ein analoges Videosignal und Zuführen des selektierten umgewandelten analogen Videosignals zu der Datenleitung,
wobei der zweite Schritt aufweist:

Zwischenspeichern der Eingabedaten (Data) zum Bilden von zwischengespeicherten Daten (RData);
Erzeugen der modulierten Daten (MData) entsprechend den zwischengespeicherten Daten (RData), wobei das Erzeugen der modulierten Daten (MData) aufweist: Erzeugen eines Grauskala-Analysesignals (GAS) mittels Analysierens von mindestens zwei höchstwertigen Bitdaten (j) der zwischengespeicherten Daten (RData); Erzeugen eines Addier-Bits (ABit) von mindestens zwei Bits entsprechend dem Grauskala-Analysesignal (GAS); und Erzeugen der modulierten Daten (MData) mittels Addierens des Addier-Bits (ABit) zu den zwei höchstwertigen Bits der zwischengespeicherten Daten (RData); und
Umwandeln der modulierten Daten (MData) in ein erstes analoges Videosignal (Vmdata) und Zuführen des ersten analogen Videosignals (Vmdata) zu der Datenleitung während eines Anfangszeitabschnitts (T1) einer Daten-Ausgabeperiode eines Quellausgabe-Freigabesignals (SOE), und Umwandeln der zwischengespeicherten Daten (RData) in ein zweites analoges Videosignal (Vdata) und Zuführen des zweiten analogen Videosignals (Vdata) zu der Datenleitung während eines restlichen Zeitabschnitts (T2) ausschließlich des Anfangszeitabschnitts (T1) der Daten-Ausgabeperiode eines Quellausgabe-Freigabesignals (SOE).

9. Verfahren gemäß Anspruch 8, wobei der zweite Schritt ferner aufweist:

Erzeugen eines ersten und zweiten Daten-Ausgabesignals (DOS1, DOS2), die unterschiedliche logische Zustände aufweisen, unter Verwendung eines Quellausgabe-Freigabesignals (SOE).

10. Verfahren gemäß Anspruch 9, wobei das Erzeugen des ersten und zweiten Daten-Ausgabesignals (DOS1, DOS2) aufweist:

Multiplizieren der Frequenz des Quellausgabe-Freigabesignals (SOE) mit Zwei zum Erzeugen eines multiplizierten Quellausgabe-Freigabesignals (DSOE);
Verzögern des Quellausgabe-Freigabesignals (SOE) entsprechend dem multiplizierten Quellausgabe-Freigabesignal (DSOE) zum Erzeugen eines verzögerten Quellausgabe-Freigabesignals (DS);
Erzeugen des zweiten Daten-Ausgabesignals (DOS2) mittels Anwendens einer logischen Operation auf das multiplizierte Quellausgabe-Freigabesignal (DSOE) und das verzögerte Quellausgabe-Freigabesignal (DS); und
Erzeugen des ersten Daten-Ausgabesignals (DOS1) mittels Anwendens einer logischen Operation auf das zweite Daten-Ausgabesignal (DOS2) und das Quellausgabe-Freigabesignal (SOE) .

11. Verfahren gemäß Anspruch 8, wobei die zwischengespeicherten Eingabedaten (RData) die gleiche Anzahl von Bits aufweisen wie die modulierten Daten (MData).

12. Verfahren gemäß Anspruch 8, wobei die Grauskala der modulierten Daten (MData) größer ist als die Grauskala der zwischengespeicherten Eingabedaten (RData).

**Revendications**

1. Appareil destiné à commander un dispositif LCD, comprenant :

une unité d'affichage d'image (2) comprenant une pluralité de cellules à cristaux liquides formées en zones définies par une pluralité de lignes de porte et de données (GL1-GLn, DL1-DLm) ;
un dispositif de commande de porte (4) pour fournir une impulsion de balayage à chacune des lignes de porte (GL1-GLn) ;
un dispositif de commande de données (6) pour générer des données modulées selon les données d'entrée, afin de convertir de manière sélective les données d'entrée et les données modulées en un signal vidéo analogique, et pour fournir le signal vidéo analogique à chacune des lignes de données (DL1 - DLm) ; et
un contrôleur de synchronisation (8) pour agencer des données de source fournies de manière externe, pour fournir les données de source agencées au dispositif de commande de données (6), et pour commander le dispositif de commande de données (6) et le dispositif de commande de porte (4),
dans lequel le dispositif de commande de données (4) comprend :

un verrou (130) pour verrouiller les données d'entrée (Data) ;
un modulateur (140) pour générer les données modulées (MData) selon les données verrouillées (RData) fournies à partir du verrou (130), le modulateur (130) comprenant une unité d'analyse d'échelle de gris (310) pour générer un signal d'analyse d'échelle de gris (GAS) en analysant au moins deux bits de poids fort (j) des données verrouillées (RData), une unité de génération de bit de sommation (320) pour générer un bit de sommation (ABit) d'au moins deux bits selon le signal d'analyse d'échelle de gris (GAS), et une unité de sommation (330) pour générer les données modulées (MData) en ajoutant le bit de sommation (ABit) aux au moins deux bits de poids fort des données verrouillées (RData) ; et

un convertisseur numérique-analogique pour convertir les données modulées (MData) en un premier signal vidéo analogique (Vmdata) et pour fournir le premier signal vidéo analogique (Vmdata) à la ligne de données pendant une période de temps initiale (T1) de la période de sortie de données d'une validation de sortie de source (SOE), et pour convertir les données verrouillées (RData) en un second signal vidéo analogique (Vdata) et pour fournir le second signal vidéo analogique (Vdata) à la ligne de données pendant une période de temps restante (T2) à l'exclusion de la période de temps initiale (T1) de la période de sortie de données d'une validation de sortie de source (SOE).

2. Appareil selon la revendication 1, dans lequel le dispositif de commande de données (6) comprend en outre :

un générateur de signal de sortie de données (112) pour générer des premier et second signaux de sortie de données (DOS1, DOS2) présentant des valeurs différentes en utilisant une validation de sortie de source (SOE) fournie à partir du contrôleur de synchronisation (8) ;
un registre à décalage (120) pour générer un signal d'échantillonnage (Sam) et pour fournir le signal d'échantillonnage au verrou (130).

3. Appareil selon la revendication 2, dans lequel le générateur de signal de sortie de données (112) comprend :

une unité de multiplication (200) pour multiplier la fréquence de la validation de sortie de source (SOE) par deux de façon à générer une validation de sortie de source multipliée (DSOE) ;
une unité de retard (210) pour retarder la validation de sortie de source (SOE) selon la validation de sortie de source multipliée (DSOE) afin de générer une validation de sortie de source retardée (DS) ;
une seconde unité de génération de signal de sortie de données (220) pour générer le second signal de sortie de données (DOS2) en opérant de manière logique sur la validation de sortie de source multipliée (DSOE) et sur la validation de sortie de source retardée (DS) ; et
une première unité de génération de signal de sortie de données (230) pour générer le premier signal de sortie de données (DOS1) en opérant de manière logique sur le second signal de sortie de données (DOS2) et sur la validation de sortie de source (SOE).

4. Appareil selon la revendication 3, dans lequel les première et seconde unités de génération de signal de sortie de données (230, 220) sont constituées par des portes de fonction NON-OU.

5. Appareil selon la revendication 2, dans lequel le modulateur (140) comprend en outre :

une première unité de sortie (340) pour délivrer en sortie les données modulées (MData) au convertisseur numérique-analogique (150) selon le premier signal de sortie de données (DOS1) ; et
une seconde unité de sortie (350) pour délivrer en sortie les données verrouillées (RData) au convertisseur numérique-analogique (150) selon le second signal de sortie de données (DOS2).

6. Appareil selon la revendication 1, dans lequel les données verrouillées et les données modulées présentent un nombre de bits identique.

7. Appareil selon la revendication 1, dans lequel l'échelle de gris des données modulées est plus grande que l'échelle de gris des données verrouillées.

8. Procédé destiné à commander un dispositif LCD présentant une unité d'affichage d'image (2) comprenant une pluralité de cellules à cristaux liquides formées en zones définies par une pluralité de lignes de porte et de données (GL1-GLn, DL1-DLm), comprenant :

une première étape consistant à fournir une impulsion de balayage à chacune des lignes de porte (GL1-GLn) ; et
une seconde étape consistant à générer des données modulées à partir des données d'entrée selon les données d'entrée, convertir de manière sélective les données d'entrée et les données modulées en un signal vidéo analogique, et fournir le signal vidéo analogique converti sélectionné à la ligne de données, dans lequel la seconde étape comprend ;
le verrouillage des données d'entrée (Data) pour former des données verrouillées (RData) ;
la génération de données modulées (MData) selon les données verrouillées (RData), dans lequel la génération des données modulées (MData) comprend : la génération d'un signal d'analyse d'échelle de gris (GAS) en analysant au moins deux bits de poids fort (j) des données verrouillées (RData) ; la génération d'un bit de sommation (ABit) d'au moins deux bits selon le signal d'analyse d'échelle de gris (GAS) ; et la génération des données modulées (MData) en ajoutant le bit de sommation (ABit) et les au moins deux bits de poids fort des données verrouillées (RData) ; et
la conversion des données modulées (MData) en un premier signal vidéo analogique (Vmdata) et fournir le premier signal vidéo analogique (Vmdata) à la ligne de données pendant une période de temps initiale (T1) de la période de sortie de données d'une validation de sortie de source (SOE), et la conversion des données verrouillées (RData) en un second signal vidéo analogique (Vdata) et fournir le second signal vidéo analogique (Vdata) à la ligne de données pendant une période de temps restante (T2) à l'exclusion de la période de temps initiale (T1) de la période de sortie de données d'une validation de sortie de source (SOE).

9. Procédé selon la revendication 8, dans lequel la seconde étape comprend en outre :

la génération des premier et second signaux de sortie de données (DOS1, DOS2) présentant des états logiques différents en utilisant une validation de sortie de source (SOE).

10. Procédé selon la revendication 9, dans lequel la génération des premier et second signaux de sortie de données (DOS1, DOS2) comprend :

la multiplication de la fréquence de la validation de sortie de source (SOE) par deux de façon à générer une validation de sortie de source multipliée (DSOE) ;
le retard de la validation de sortie de source (SOE) selon la validation de sortie de source multipliée (DSOE) afin de générer une validation de sortie de source retardée (DS) ;
la génération du second signal de sortie de données (DOS2) en opérant de manière logique sur la validation de sortie de source multipliée (DSOE) et sur la validation de sortie de source retardée (DS) ; et
la génération du premier signal de sortie de données (DOS1) en opérant de manière logique sur le second signal de sortie de données (DOS2) et sur la validation de sortie de source (SOE).

**11.** Procédé selon la revendication 8, dans lequel les données d'entrée verrouillées (RData) et les données modulées (MData) présentent un nombre de bits identique.

**12.** Procédé selon la revendication 8, dans lequel l'échelle de gris des données modulées (MData) est plus grande que l'échelle de gris des données d'entrée verrouillées (RData).

# FIG. 1
# Related Art

# FIG. 2
# Related Art

# FIG. 3
# Related Art

Fn-1 | 0 | 0 | 1 | 1 | 0 | 1 | 0 | 1 |

four most significant bits

Fn | 0 | 1 | 0 | 0 | 1 | 1 | 1 | 1 |

four most significant bits

MRGB | 0 | 1 | 1 | 0 | 1 | 1 | 1 | 1 |

four most significant bits

# FIG. 4
# Related Art

# FIG. 5

RGB

DCLK
Hsync
Vsync
DE

timing controller

8

DCS & Data

GCS

4

gate driver

6

data driver

DL1    DL2    ....    DLm

GL1

Cst    Vcom
       Clc

TFT

GL2

GL3

GLn-1

GLn

2

EP 1 870 876 B1

# FIG. 6

# FIG. 7

112

200

source output enable multiply unit

SOE

DSOE

220

second data output signal generating unit

DOS2

delay unit

DS

210

DOS2

first data output signal generating unit

SOE

DOS1

230

# FIG. 8

# FIG. 9

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5495265 A
- WO 9909967 A
- US 2006017713 A1
- US 2003048246 A1